(19) Europäisches Patentamt
European Patent Office
Office européen des brevets

(11) EP 1 901 490 A1

(12) EUROPEAN PATENT APPLICATION

(43) Date of publication:
19.03.2008 Bulletin 2008/12

(51) Int Cl.:
H04L 12/44 (2006.01)   G10H 1/00 (2006.01)

(21) Application number: 06019480.0

(22) Date of filing: 18.09.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicants:
• Lukac-Kuruc, Eric
1861 Meise (BE)
• Herscovitch, David
1180 Bruxelles (BE)

(72) Inventors:
• Lukac-Kuruc, Eric
1861 Meise (BE)
• Herscovitch, David
1180 Bruxelles (BE)

(74) Representative: Colens, Alain M.G.M.
Office Hanssens Colens
Square Marie Louise 40
Bte 19
1000 Bruxelles (BE)

(54) Network architecture

(57) A node has a single DOWN communication port (1) and N (N is an integer greater or equal to 1) UP communication ports (2). Both UP and DOWN ports are able to receive messages (3) and send messages (4). The node is also able to store a message that it receives for local use. It is also able to relay the message it receives to either its DOWN port or to its UP ports. A node receives a message (22) through one of its UP ports (12) and relays it (outgoing message 32) to a downstream node through its DOWN port (42). When a node receives a message through one of its UP ports, the message is immediately relayed word by word to the next node through the DOWN port. Relaying begins immediately as soon as the first word arrives at the UP port. When a node receives a message through its DOWN port, two things happen simultaneously: (a) the message is immediately relayed word by word to the next nodes through the UP ports of the node; and (b) the message is stored in a buffer for decoding once the complete message has been received. A node is able to detect if its DOWN port is connected to another node or not.

Figure 5b

EP 1 901 490 A1

## Description

### Field of the Invention:

The present invention relates to communication network and methods to transmit data through that communication network in general and method that will reduce the transit time of a message between nodes of the network in particular.

### References:

- "Norme MIDI Tome 1", Christian Braut ISBN-2-7361-1400-0

- US 5,983,280 "System using standard Ethernet frame format for communicating MIDI information over an Ethernet network", Mark Hunt, Light & Sound Design Ltd.

- US 6,067,566 "Method and apparatus for distributing live performances on MIDI devices via a non real time network protocol", William Moline, Laboratory Technologies Corporation.

### Description of the Related Art:

Communication networks are increasingly necessary in the performing arts: the lightshow, electronic musical instruments, studio equipment, theme parks, as well as on stage, and are more and more often computer controlled. All those devices have to operate in well-known sequences that may not suffer time delays; ... the most widespread communication protocol used to control musical instruments and associated equipment is MIDI (Musical Instrument Digital Interface).
MIDI devices are equipped with MIDI-IN, MIDI-OUT and the optionally MIDI-Thru connectors (we will also refer to these connectors as ports). It is known to connect several MIDI devices to allow them to exchange information in real time. In a so-called one-way connection, a connection extends between the MIDI-OUT connector of a first midi device (referred to as device A) and the MIDI-IN connector of a second MIDI device (referred to as device B). The link is unidirectional, the information flow from device A to device B. It is also known to add a second connection extending between the MIDI-IN connector of device A and the MIDI-OUT connector of device B. This is the so-called handshake link where device A can be controlled by or through device A and vice versa and MIDI messages can be exchanged between the two devices. It is also known from the art to daisy-chain MIDI devices: a connection extends between the MIDI-OUT connector of a first MIDI device (or device A) and the MIDI-IN connector of a second MIDI device (or device B) and a connection extends between the MIDI-THRU connector of device B an the MIDI-IN connector of a third MIDI device (device C), ... Any message received by the MIDI-IN of a device is also sent though the MIDI-THRU connection. By connecting the MIDI-OUT port of device A to the MIDI-IN port of device B and the MIDI-THRU port of device B to the MIDI-IN port of device C, it is possible to pilot devices B and C from device A, the information received by device B being duplicated and immediately relayed to device C. In theory, it is possible to daisy chain a few MIDI devices. Unfortunately, connecting back devices b, c and possibly some more, would require device A to offer as many input ports as the number of devices to receive information from.
The performance of a MIDI setup may be improved a little with the use of so-called MIDI merger, MIDI Thru box, MIDI patches ...
The main disadvantages of a MIDI link are unidirectionnality, low bandwidth and the fact that MIDI's communication is dependent on the setup of the wired connections between devices, which is not practical if devices connected in the setup are regularly moved within the setup, yet must be instantly addressable once they are reconnected in a setup, whatever their new position within that setup is.
Also known from the art is the so-called MediaLink network that alleviates some of the limitations of MIDI. A MediaLink network comprises a given number of devices that are connected one with another in series (so called bus structure) or are connected to a central element that will manage all communications from one node to another (so called star structure). In order to determine what goes where within the network, the LANScape must be determined first by LANscape, we mean the connection topology between every source and every possible destination in the network. It is possible to reconfigure the network rapidly, but the LANScape must always be determined first.
In US 5, 983,280 both MIDI and non-MIDI devices are present on the same communication bus. The midi devices are connected to the bus through MIDI conversion devices that convert MIDI information to an Ethernet format. An Ethernet broadcast or multicast address is used. In US 6,067,566 a method and an apparatus are proposed to distribute MIDI information across a network using protocols such as TCP-IP protocols.

The problems with the proposed networks are that either they are limited to a single Ethernet cable or they require a router and/or routing algorithms. Routing suppose that every device in the network occupy a known/determined position and that position must be known by the router(s). This is not practical for networks where the networked devices relative positions are likely to vary significantly as would be the case with musical instruments, lights, ... on a stage or networks involving a great number of devices leading to an increasing routing delay.

The art proposes solutions that either require some form of mapping of the network and/or routing algorithm i.e. method to determine a route that a message will have to follow to reach its destination(s) and/or where reception of a message is differed in time. In particular, routing of a message requires to decode the address(es) contained in the message, which requires time. Those are limitations for the kind of network considered here where no mapping is available/desired and where the information must be exchanged in real time. There remains a need for improvement.

**Summary of the invention:**

An object of the invention is to provide a data transmission system comprising a plurality of nodes connected through a communication network and a method to transmit a message from a node in the network to one or several other nodes in that network without the use of a router device and routing algorithm in a minimum amount of time.

What is meant by node is any device capable of receiving or sending messages and use the information contained in those messages. In particular, a node might be an electronic musical instrument that will produce sounds according to the information contained in a message it receives. It may also be a spotlight that will be turned on/off or adapt the level of light depending on the information contained in the message. The same spotlight could also send information concerning its settings (is it turned on or off? what is its temperature? For how long its light bulb is in operation? ...). In general, a node considered in this invention could be any type of sensor, actuator, digital or analog signal processing equipment, computer, computer peripherals, ... Each node is equipped with the necessary hardware and/or software to receive and/or send messages and store those messages.

Each node of the network comprises 1+ N communication ports where N is an integer greater or equal to 1. We will refer to the first of these communication ports as the DOWN port and the N following communication ports as the UP ports.

The nodes are connected with each other to form a communication network. A connection extends between the DOWN port of a first node and one of the N UP ports of a second node. Depending on its position in the network and the number of nodes, all, some or none of the UP ports of a node will be connected to the DOWN port of up to N other node.

Some nodes of the network with no connections between any of their UP ports and another node in the network make part of the external layer of nodes, they are directly connected through their DOWN port to UP ports of the nodes in a following layer of node, .... Starting from any node of the external layer of nodes and following the DOWN to UP connections, one will always end up on a node without connection between its DOWN port and another node. A single node is allowed to have no connection extending between its DOWN port and an UP port of another node. That last node is referred to as the ROOT node or ROOT. There is a single ROOT within the entire network.

Messages are sent in two stages: when any node sends a message, it does so through its DOWN port. The message is received by a single node that shares a connection with the node from where the message originates. The message is relayed by that second node through its DOWN port to the next node, and so on... until the message reaches the ROOT node. The ROOT nodes then broadcasts the message back to every node connected to the root node. Those nodes will in turn broadcast the messages to the nodes connected to their UP ports, ... The message is relayed by every node within the network to the nodes that are connected to its UP ports. In this manner, the message is guaranteed to arrive at its destination(s).

**Brief Description of the Drawings:**

Figure 1 shows a node according to the invention
Figure 2 shows a node receiving a message and relaying it
Figure 3 shows a data transmission system according to the invention
Figure 4 shows a message falling down the network
Figures 5a and 5b show the root node broadcasting the message it receives
Figure 6 shows a message climbing up the network

**Description of Embodiments:**

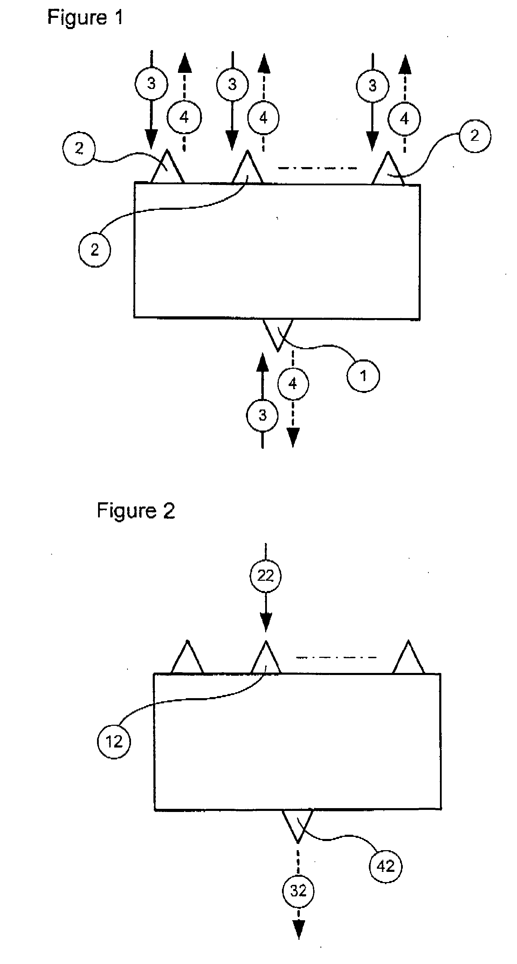

Figure 1 shows a node according to the invention. A node is an entity that in addition to specific abilities (e.g. actuator, musical sequencer, digital musical instrument, spotlight, sensor, digital or analog signal processing, computing, ...) is able to receive, store and send messages through communication ports. The node has a single DOWN communication port **1** also referred to as the DOWN port and N (N is an integer greater or equal to 1) UP communication ports **2** also referred to as UP ports. Both UP and DOWN ports are able to receive messages 3 and send messages **4.** A node according to this invention is also able to store a message that it receives for local use. It is also able to relay the message it receives to either its DOWN port or to its UP ports. As in figure 2, a node receives a message **22** through one of its UP ports **12** and relays it (outgoing message **32**) to a downstream node through its DOWN port **42**. When a node receives a message through one of its UP ports, the message is immediately relayed word by word to the next node through the DOWN port. Relaying begins immediately as soon as the first word arrives at the UP port. When a node receives a message through its DOWN port, two things happen simultaneously: (a) the message is immediately relayed word by word to the next nodes through the UP ports of the node (b) the message is stored in a buffer for decoding once the complete message has been received. A node is able to detect if its DOWN port is connected to another node or not. This can be done by any technique known in the art. A single node in the network has no other node connected to its DOWN port, that node is the ROOT node. Each node is identified by an identifier or address.

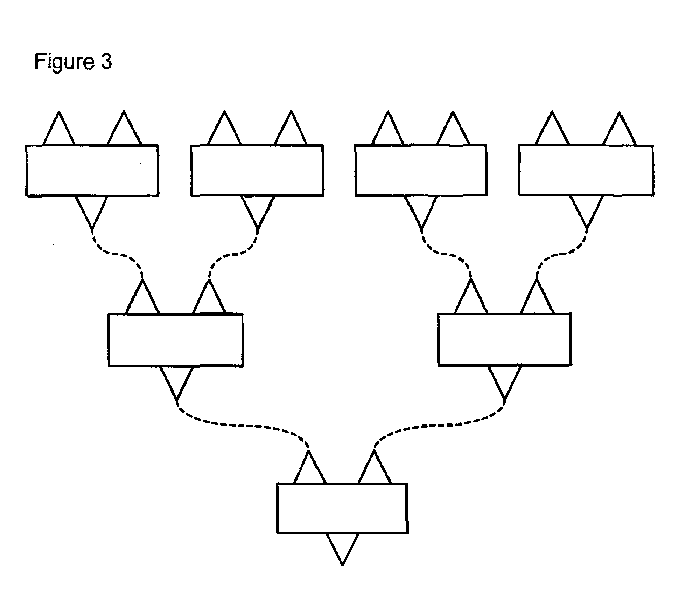

Figure 3 shows a communication network according to the invention. Connections in the network are made between the DOWN port of a node and the UP port of another node. No connection extends between two DOWN ports. No connection extends between two UP ports. Every node in the network has a unique identifier that can be used as an address for that node in the network. We will use the word identifier or address indiscriminately. A single node in the entire network is not connected to any other node in the network through its DOWN port. This node, the ROOT node or ROOT may identify itself as the ROOT or be identified as the ROOT by an external agent (without being restrictive, this could be done in hardware with a switch or in software with a configuration bit).

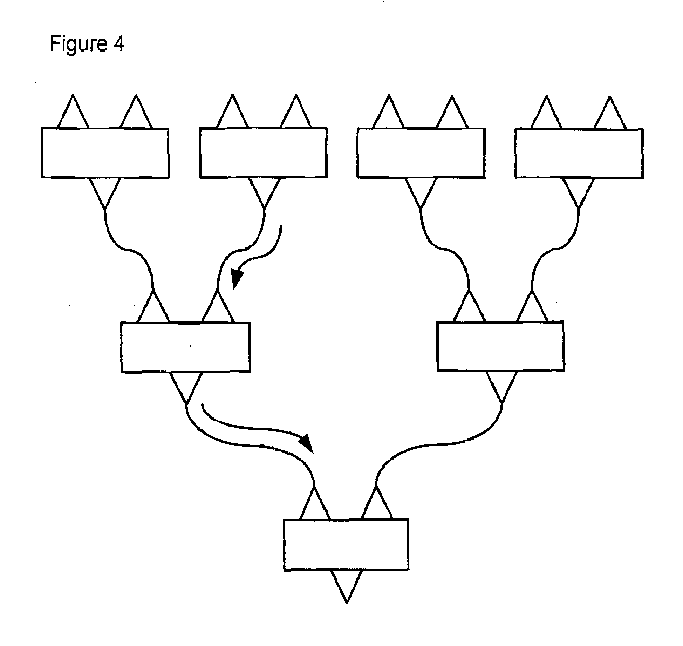

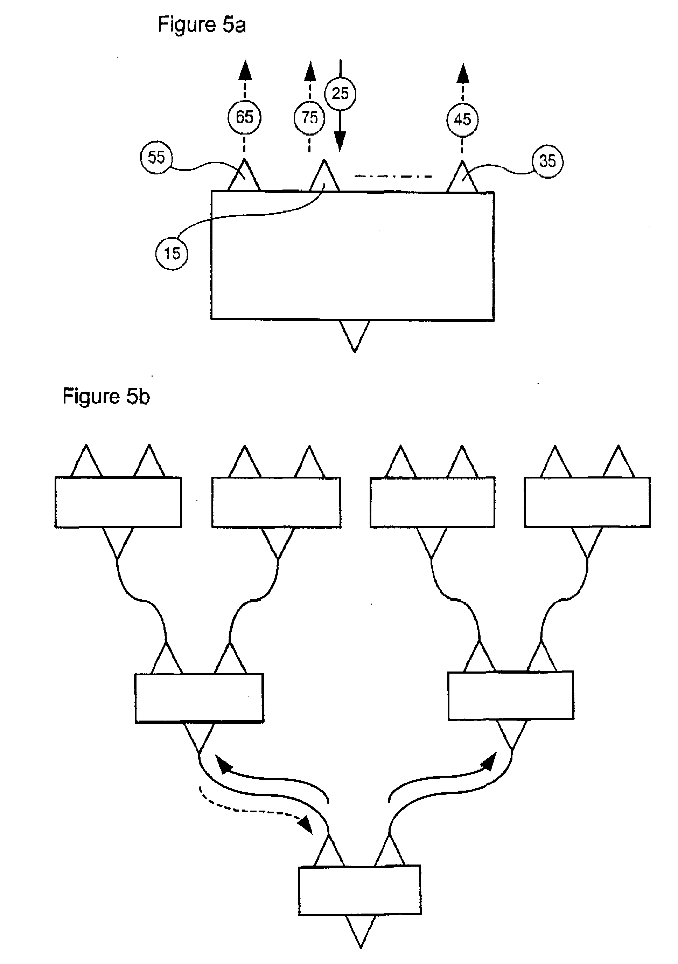

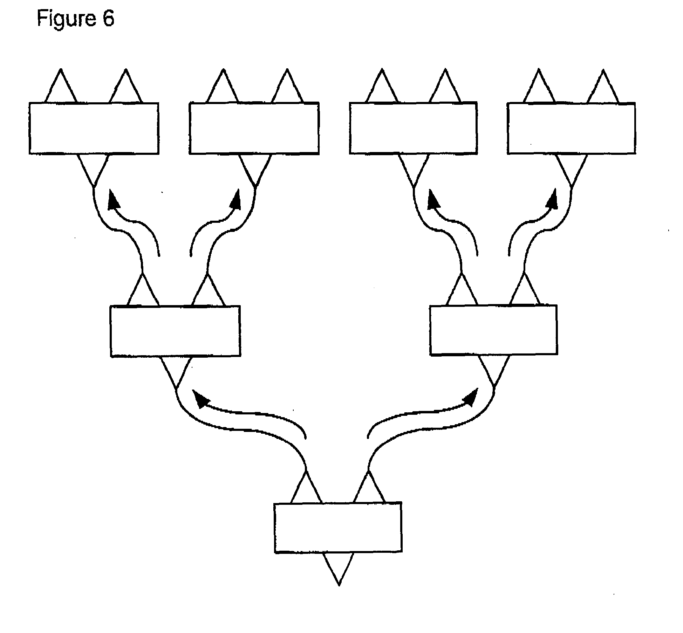

When a node need to send a message to one or several other nodes in the network, it includes in the header of that message the address(es) of the node(s) for which the message is destined (Multiaddressing, i.e. sending the same message to several nodes at the same time, avoids that a node will sent several time the same message to several different addresses, one address at a time). The node then sends the message through its DOWN port to the node connected to it which in turn relays it to the node connected to its DOWN port, ... until the message arrives at the ROOT node, the message is said to be falling down the network or alternatively, it is called a falling message (see Figure 4). When it has received the entire message, the ROOT node relays the incoming message **25** to all its UP ports **15, 35, 55,** ... i.e. as soon as it receives a message **25** through an UP port **15,** the ROOT will duplicate it into messages 45, 65, and 75; and broadcast those messages to the nodes that are connected to each of its UP ports (see figure 5a). On figure 5b one sees a falling message (dotted arrow) that is being received and concurrently rebroadcast by the root node (continuous arrows). The message is said to be climbing-up the network or alternatively, it is said to be a climbing message. When it receives a falling message, the ROOT node does two things: (a) relays the message word by word through its UP ports (i.e. every word received is relayed immediately) and (b) simultaneously stores the message for local use. If the address or one of the addresses contained in the header matches the address of the ROOT node, the ROOT node knows the message is intended for it and it will use the information contained in the message accordingly. A node knows it receives a climbing message when it receives a message through its DOWN port. As is evident from figure 6, climbing messages are always received through a DOWN port. When receiving a climbing message, a node (a), immediately relays the message word-by-word through its UP ports and (b) simultaneously stores the message for local use. Once it has received the full message, the end of a message is indicated by a marker of end of message, the node knows the message was intended for itself if the address or one of the addresses contained in the header of the message corresponds to its address and it will use the information contained in the message accordingly.

As is clear from the above, a message is sent from node to node without latency, e.g. any incoming message is relayed word by word to the neighboring nodes (either downstream for a falling message or upstream for a rising message) as soon as a it arrives. This will on the average reduce the amount of time required to transmit a message from a first arbitrary node of the network to one or more other nodes of that network.

It is clear from the above, that an advantage of the invention is that nodes may be added to the network or that nodes may be interchanged within that network without requiring any precautions as long as:

- There is a single ROOT node in the network, e.g. there is single node in the network with no other node connected to its DOWN port.
- No connection exists between two UP ports or between two DOWN ports. A connection always extends between the DOWN port of a first node and an UP port of a second node.
- Each node has a unique identifier that identifies it uniquely within the network and that is known by the other nodes in that network before they send information to that node.

It is also clear from the above that another advantage of the invention is that the identifier or address of a node is not linked to the position of that node within the network and that no information concerning the position of the node within the network is required to guarantee that a message addressed to that node will arrive at that node. Be Nb the number of nodes in the network, between the root and the node the furthest away from the root, plus 1, in case of networks according to present invention; or between the two nodes the furthest away from each other +1, in case of networks according to prior art,
SW the duration of a word (i.e. a fixed number of bits), the message being a succession of such words, AW the number of word to read in the message until knowing the address(es) of the node(s) related data to which the message is addressed, FO a fixed overhead for address parsing and decoding.

The maximum time T it takes to send a message between two nodes in a network according to this invention is:

$$T = (Nb \times 2 \times SW) + (SW \times (AW-1)) + FO$$

Indeed, every node in the network adds a maximum delay of SW duration of reception of a word (Let us remind that whenever a node receives words composing a message, it relays every word without delay to the next node(s)), a first time when the message falls down the network and a second time when the message climbs up the network. In the worst case:

- The nodes have a single UP port
- The message is sent by the node most remote from the ROOT
- The message is meant for the node the furthest away from the ROOT

In that case, the message is relayed by Nb nodes before reaching the ROOT, is relayed by the ROOT and by Nb-1 node before reaching its address hence the upper boundary 2 Nb SW for the delay incurred by relaying the message word by word at each node.
It takes an additional time (SW x (AW - 1)) for the address in the message to be received, but only in addition to the time to reach said node. It takes an additional time FO for a node to parse through the message and check whether or not the message is meant for that node. Hence, the maximum time it takes for a message to travel between the moment it is sent and the moment it is received at its destination is T = (Nb x 2 x SW) + (SW x (AW-1)) + FO. This amount of time is inferior to T = Nb x ((SW x AW) +FO) which is the amount of time that a message requires to travel between the node that sent it and the node that receives it in networks known from the art e.g. LAN or Ethernet where every node receives a message or packet containing the address in its entirety before redirecting it to the next node.

**Claims**

1. A data transmission system comprising a plurality of nodes connected through a communication network to each other to be mutually communicable **characterized in that**,

   • each of said plurality of nodes includes 1+(N>0) communication ports to send and receive messages
   • the connections between any two nodes extends between the first communication port of the first node and any of the last N communication ports of the second node

2. A data transmission system according to claim 1 **characterized in that** a single node in the communication network, called the root node, is not connected to another node **in that** network through its first communication port

3. A data transmission system according to claim 2 **characterized in that** each node features means to relay messages received through any of the last N communication ports to their first communication port and/or to any or all of the last N communication ports.

4. A data transmission system according to claim 2 or 3 **characterized in that** each node features means to relay messages received through their first communication port to their last N communication ports.

5. A data transmission system according to claim 1, 2,3 or 4 where each node features

- means to store a message received through the first communication port
- means to buffer portions of a message received through the N+1 communication ports

6. A data transmission system according to claim 5 where each node features means to process the information contained in the messages it receives through any of the N+1 communication ports or stored or buffered in the storage or buffer means

7. A node to node transmission method for a data transmission system comprising a plurality of nodes connected through a communication network to each other to be mutually communicable wherein

- each of said plurality of nodes includes 1+N communication ports to send and receive messages
- the connections between any two nodes extends between the first communication port of the first node and any of the last N communication ports of the second
- a single node, called the root node, in the communication network is not connected to another node in that network through its first communication port
- eaEach node of the communication network has a unique identifier or address

and comprising the steps of

- while a node receives a message or after a node has received a message through any of its N last communication ports, relaying the message to the next node through the first communication port
- while the root node receives or after the root node has received a message, broadcasting the message back to the nodes that are connected to any of the N last communication ports of the root node
- while a node receives a message or after a node has received a message through its first communication port, broadcasting the message back to the nodes that are connected to any of the N last communication ports of the node

8. A node to node transmission method according to claim 7 **characterized in that** when a message is received by a node through any of the N last communication ports, the node stores the message locally for immediate or later use.

9. A node to node transmission method according to claim 8 **characterized in that**, the node looks in the message for instructions to be executed.

10. A node to node transmission method according to claim 8 **characterized in that**, the node compares any addresses of the message addressees contained in the message and if one of those addresses corresponds to the address of the node, it uses the information contained in the message otherwise the message is discarded.

Figure 1

Figure 2

Figure 3

Figure 4

## Figure 5a

## Figure 5b

Figure 6

**European Patent Office**

**EUROPEAN SEARCH REPORT**

Application Number

EP 06 01 9480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 347 498 A (LEE ROBERT P ET AL) 31 August 1982 (1982-08-31) * abstract * * column 1, line 8 - column 6, line 50 * * figures 1-4 * ----- | 1-10 | INV. H04L12/44 G10H1/00 |
| X | US 4 809 362 A (CLAUS RICHARD O [US] ET AL) 28 February 1989 (1989-02-28) * abstract * * column 1, line 5 - column 9, line 37 * * figures 1,3,4 * ----- | 1-10 | |
| X | GB 2 254 982 A (BRITISH AEROSPACE [GB]) 21 October 1992 (1992-10-21) * abstract * * page 1, line 2 - page 4, line 24 * * page 7, line 5 - page 8, line 1 * * figures 1-3 * ----- | 1-10 | |
| | | | TECHNICAL FIELDS SEARCHED (IPC) |
| | | | G10H H04L |

The present search report has been drawn up for all claims

| Place of search | Date of completion of the search | Examiner |
|---|---|---|
| Munich | 19 January 2007 | Mariggis, Athanase |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 06 01 9480

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2007

| Patent document cited in search report | | Publication date | Patent family member(s) | | Publication date |
|---|---|---|---|---|---|
| US 4347498 | A | 31-08-1982 | CA | 1141838 A1 | 22-02-1983 |
| | | | DE | 3066854 D1 | 12-04-1984 |
| | | | EP | 0029502 A1 | 03-06-1981 |
| | | | JP | 1262992 C | 16-05-1985 |
| | | | JP | 59036459 A | 28-02-1984 |
| | | | JP | 59039942 B | 27-09-1984 |
| | | | JP | 1206693 C | 11-05-1984 |
| | | | JP | 56076656 A | 24-06-1981 |
| | | | JP | 58040384 B | 05-09-1983 |
| US 4809362 | A | 28-02-1989 | NONE | | |
| GB 2254982 | A | 21-10-1992 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5983280 A

- US 6067566 A

**Non-patent literature cited in the description**

- **CHRISTIAN BRAUT.** Norme MIDI Tome 1